# EUROPEAN PATENT APPLICATION

(11) **EP 0 898 157 A1**
(43) Date of publication of application: **24.02.1999**
(21) Application number: 98202683.3
(22) Date of filing: 10.08.1998
(51) Int. Cl.: G01J 1/04, H05B 37/02

(54) **Light sensor assembly**

(30) Priority: 15.08.1997 NL 1006779
(71) Applicant: MAARS HOLDING B.V., NL-3846 BJ Harderwijk (NL)
(72) Inventor: Maneschijn, Frits, 3840 AD Harderwijk (NL)
(74) Representative: van der Arend, Adrianus G.A., Ir.

(57) **Abstract**

Light sensor assembly for a lighting installation for controlled illumination of a room, comprising a light sensor (2) and auxiliary means which are suitable for attaching the sensor (2) to a ceiling (6) of the room and for receiving light emanating from a diffusely reflecting surface (7) having reflection properties which are substantially the same as those of the ceiling (6), the diffusely reflecting surface (7) being substantially parallel to the ceiling (7) and, substantially without a diaphragm, being impinged on by ambient light.

## Description

The invention relates to a light sensor assembly according to the preamble of claim 1.

A light sensor assembly of the type mentioned above is known from European Patent Application EP-A-0021887. The known assembly is substantially in the form of a bowl which is suitable to be attached with the outside of the base of the bowl against a vehicle. Between the base and the opening edge of the bowl, there is a light-transmitting window which, with respect to the base, defines a chamber. A diffusely reflecting layer is arranged on the base. A light sensor receives light which has been reflected diffusely by this layer. The direction from which ambient light may be incident on the diffusely reflecting surface via the window is limited by a diaphragm arranged outside the chamber. The assembly is intended to be arranged with a plurality of identical assemblies spread over the periphery of an army vehicle. The diffusely reflecting surface and the diaphragm are used to make the assembly suitable for being able to detect enemy targeted laser beams which comprise narrow or wide beams and which may be continuous or may comprise strong pulses. The window specifically transmits laser light of this nature.

In buildings, it is becoming increasingly desirable to control a lighting installation for illuminating one or more rooms by means of artificial light sources depending on light emanating from external light sources, so as to maintain a defined lighting level in an illuminated room.

In practice, a light detector assembly for use in a lighting installation of this nature is known, a light sensor of the assembly receiving light coming directly from below. As a result, light emanating from an external light source, such as the sun, can reach the opening for incident light by being reflected from mirror or shiny surfaces. If the lighting installation is initially set in the presence of mirror or shiny surfaces of this nature, and external light sources and their location and properties do not change, it does not necessarily have to be a drawback that controlling the artificial light sources is dependent on the presence of mirror or shiny surfaces and external light sources of this nature. For example, it is possible to continue to satisfy official rules relating to the intensity of lighting inside the room.

In practice, the total reflection brought about by the surroundings of the light sensor and the location and properties of external light sources will change. As a result, the artificial light sources are in practice often adjusted to a state which provides an undesirable level of illumination inside the room. Such a situation, which may arise slowly, and consequently unnoticed to people, may occur when people move inside the room, when furniture or other objects are moved with respect to the initial situation and when the sun, as an external light source of changing location, shines onto the furniture and objects having mirror or shiny surfaces, possibly after reflection outside the room, for example on shiny cars parked outside the room or windows of buildings. It is possible that, while the surroundings are relatively dark, a relatively fierce beam of sunlight may be incident on a light-sensitive surface of the sensor as a result of reflection, so that the artificial light sources are adjusted to an incorrect state. Furthermore, if the lighting installation is initially set using the light sensor above an uncovered table with a matt surface, and if later, by way of example, a white cloth or piece of paper is spread over the table, the sensor will receive a relatively large amount of light scattered by the cloth, while the total luminance inside the room increases less strongly. However, the artificial light sources will then be moved into a state in which they undesirably supply less light than is necessary. The reverse also applies, i.e. if the cloth or the piece of paper was present while setting the installation and was not present after setting has taken place. The artificial light sources will then supply an unnecessarily high quantity of light and consume unnecessarily high levels of power.

The said light sensor assembly which is known from EP-A-0,021,887 is unsuitable for use in a lighting installation of the type mentioned above because, when it is arranged against a ceiling, it does not receive any light which is scattered directly by the ceiling, while the luminance of a ceiling is often greater by a factor of 7 than an uncovered floor, with the result that ambient light which is incident on the ceiling has an important influence on the total luminance inside the room.

The invention aims to eliminate the drawbacks mentioned above. To this end, the invention provides a light sensor assembly according to claim 1.

As a result, the considerable influence of the luminance of the ceiling on the total luminance is detected by the light sensor in order to obtain a better control of light inside the room. Generally, light is incident on the underside of the ceiling from all possible directions, with the result that the luminance generated by the diffusely reflecting surface of the ceiling is a consequence of all the light which is incident on the ceiling. Since the light sensor assembly according to the invention is substantially without a diaphragm, the range of the angle of incidence of the light on the diffusely reflecting surface is substantially equal to that of the ceiling itself. As a result, the light sensor will detect a very good representation of the luminance of the ceiling and better control of the lighting installation will be achieved.

Other properties and advantages of the invention will emerge from the following explanation of exemplary embodiments of the light detector assembly according to the invention in combination with the appended drawings, in which:
Fig. 1 diagrammatically shows a cross-section through a first embodiment of the light detector assembly according to the invention, which is attached to a ceiling;
Fig. 2 shows a light detector assembly similar to that of Fig. 1 with a diffusely reflecting auxiliary member opposite a sensor of the assembly;
Fig. 3 shows an embodiment similar to that of Fig. 2, the auxiliary member being a housing for an electronic circuit; and
Fig. 4 shows yet another embodiment of the light sensor assembly according to the invention.

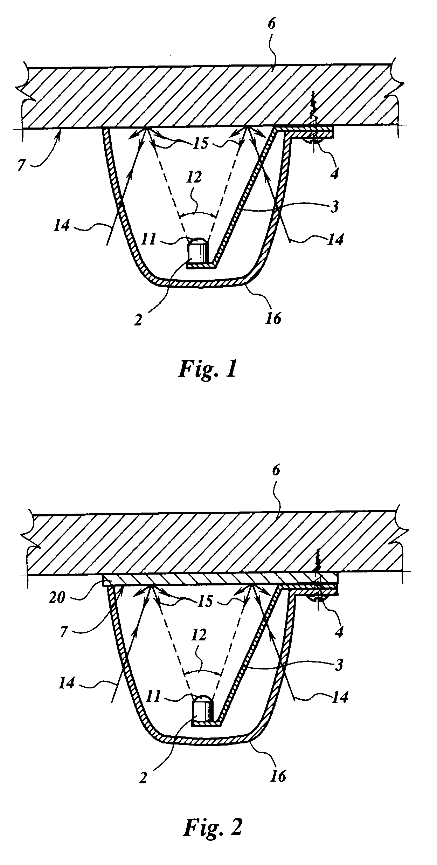

The light sensor assembly, as shown in Fig. 1, substantially comprises a light sensor 2 and an attachment member 3. The light sensor 2 is attached to the underside of a ceiling 6 by means of the attachment member 3 and a screw 4. The underside of the ceiling 6 has a diffusely reflecting surface 7. The attachment member 3 is such that an opening for incident light, for example of a lens 11 with a viewing angle 12, of the sensor 2 can be arranged at a certain distance from the diffusely reflecting surface 7 of the ceiling 6. After the light sensor assembly 2, 3 has been attached to the ceiling 6, the sensor 2 will substantially receive light which has been scattered by the ceiling 6, as indicated by the arrows 14 and 15, which represent rays of light. Since the surface 7 of the ceiling 6 is diffusely reflecting, the light which reaches a light-sensitive surface of the sensor 2 will emanate from a large number of locations within the area of the ceiling 6. It can therefore be stated that the light sensor assembly 2, 3 according to the invention substantially measures the luminance of the ceiling 6. An electronic control circuit (not shown), which is connected to the sensor 2, of a lighting installation which comprises artificial light sources which are arranged in the room is consequently less sensitive to local optical changes within the room with respect to an initial situation in which the control circuit and the lighting installation were set in order to obtain a defined illumination within the room.

Preferably, the light sensor assembly also comprises a cap 16, which surrounds the sensor 2 and the area between the ceiling 6 and the sensor 2 in a substantially dustproof manner. The cap 16 consists of transparent material, i.e. light from outside the cap 16 is incident on the diffusely reflecting surface 7 of the ceiling 6 substantially without being scattered by the cap. The cap 16 can be attached by means of the screw 4 at the same time as the attachment member 3 is attached to the ceiling 6.

The attachment member 3 may comprise one or more electrical conductors made of rigid material which, at one end, are connected to electrical terminals (not shown) of the sensor 2 and, at the other end, are connected to terminals of the said control circuit. The attachment member 3 may also comprise a support made of rigid, electrically insulating material on which electrical conductors between such terminals are arranged. The support may consist of transparent material, to which the conductors may be applied by means of screen printing. The function of the attachment member 3 can then also be fulfilled by the cap 16.

The light sensor assembly which is shown in Fig. 2 differs from the assembly shown in Fig. 1 in that an auxiliary member, in the form of a disc 20, is arranged opposite the lens 11 of the sensor 2. The disc 20 has a diffusely reflecting surface 7 which faces towards the sensor 2 and the reflection properties of which are substantially identical to those of the ceiling 6. The attachment member 3, with the attached sensor 2 and/or the cap 16 and the disc 20, may be made into an independent unit which can be attached to the ceiling 6 by means of the screw 4. Owing to the use of a disc 20 of this nature, it is no longer necessary for the underside of the ceiling 6 to be diffusely reflecting.

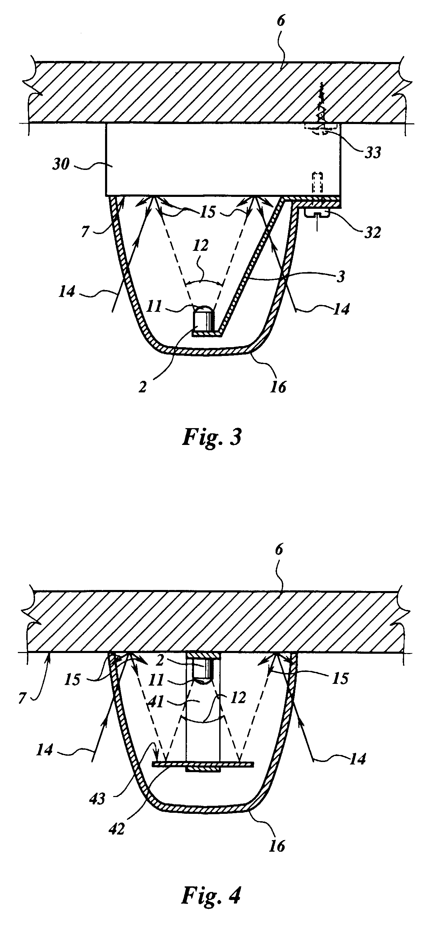

The light sensor assembly shown in Fig. 3 differs from the assembly shown in Fig. 2 by the fact that the disc 20 is replaced by a housing 30 for the control circuit, which may comprise an amplifier and a component for adjusting the measuring sensitivity. The attachment member 3 and the cap 16 are attached to the housing 30 by means of a screw 32, while the housing 30 is attached to the ceiling 6 by means of a screw 33.

The light sensor assembly shown in Fig. 4 differs from the assembly shown in Fig. 1 in that the lens 11 faces downwards, and at a certain distance from the lens 11 a further auxiliary member, in particular a mirror 42, with a mirror surface 43 facing towards the lens 11, is attached via an attachment member 41. The attachment member 41 may be in any suitable form and may be provided with an end which is to be arranged on the ceiling 6 and is of the same type as the corresponding end of the attachment member 3 shown in Figs. 1, 2 and 3, with an opening for a screw to pass through, which screw may also be used to attach the cap 16.

In the case of the light detector assembly shown in Fig. 4, light 15 which is scattered by the diffusely reflecting surface 7 of the ceiling 6 is reflected by the mirror surface 43 of the auxiliary member 42 essentially without scatter, after which it is incident, via the lens 11, on a light-sensitive surface of the sensor 2. The operation of the assembly in accordance with Fig. 4 is therefore essentially no different from the action of the assembly shown in Fig. 1. However, in the case of the assembly in accordance with Fig. 4, there is a possibility, in a simple manner, of enlarging the section of the diffusely reflecting surface 7 of the ceiling 6 from which the mirror surface 43 receives light. This is possible, for example, by employing an inclined or curved mirror surface 43, in the latter case the distance from the ceiling 6 being shortest in the centre of the mirror surface 43. If such an alternative design of the mirror surface 43 is used, the shape and the dimensions of the cap 16 as shown may be maintained, while light scattered outside the cap 16 by the ceiling surface 7 can nevertheless reach the mirror surface 43 and then the sensor 2 via the cap 16. Owing to the fact that the sensor 2 receives scattered light from a relatively large section of the ceiling, the lighting control will be less sensitive to local changes in optical properties and/or incidence of light.

A light sensor assembly as shown in Fig. 4 may be provided, in the same way as in Figs. 2 and 3, with a disc 20 or an electronics housing 30 with a diffusely reflecting surface 7 which assumes the function of scattering light within the dimensions of the disc 20 or the housing 30 of the ceiling 6.

Light which is incident on the underside of the ceiling 6 generally emanates from all directions of the room, namely either by direct incidence of light from artificial light sources in the room or from outside caused, for example, by the sun, or after optionally diffuse reflection from objects. Since the light sensor assembly according to the invention is substantially without a diaphragm, the diffusely reflecting surface 7 thereof is impinged on by light which emanates substantially from the same directions as light which would be incident on the underside of the ceiling 6 without the assembly. This applies both to the case in which the diffusely reflecting surface 7 is formed by a section of the ceiling itself (Figs. 1 and 4) or by an auxiliary member 20, 30 (Figs. 2 and 3). A lighting installation having the light sensor assembly according to the invention for illuminating a room is therefore substantially controlled by the ceiling luminance detected by the light sensor of the assembly. As a result, the lighting control obtained is only indirectly sensitive to change in light entering and/or produced in the room and change in local reflection properties of objects inside the room. As a result, the lighting control according to the invention is calmer and more stable.

## Claims

1. Light sensor assembly, comprising a light sensor (2) and auxiliary means (3, 4; 3, 30, 32, 33; 41) which are suitable for attaching the light sensor (2) to an outer side of a structure (6) and, in optical terms, opposite a diffusely reflecting surface (7) which is essentially parallel to the outer side of the structure at the location of attachment, characterized in that the auxiliary means are suitable for attaching the assembly to a ceiling (6) of a room which is illuminated by a lighting installation which is controlled by a signal obtained from the light sensor (2), the auxiliary means are substantially without a diaphragm for light directed towards the ceiling (6), and reflection properties of the diffusely reflecting surface (7) are essentially identical to those of the ceiling (6).

2. Light sensor assembly according to claim 1, characterized in that the auxiliary means (3, 4) orient the sensor (2) in such a way that the sensor (2) receives light reflected directly by the ceiling (6).

3. Light sensor assembly according to claim 1, characterized in that the auxiliary means comprise a first auxiliary member (20, 30) which defines the diffusely reflecting surface and the auxiliary means orient the sensor (2) in such a way that the sensor (2) receives light reflected directly by the diffusely reflecting surface (7) of the first auxiliary member (20, 30).

4. Light sensor assembly according to claim 3, characterized in that the first auxiliary member is a housing (30) for an electronic circuit which is connected to the sensor (2).

5. Light sensor assembly according to one of claims 2 to 4, characterized in that the auxiliary means comprise rigid, electrically conductive attachment means which are connected to electrical terminals of the sensor (2) and which hold the sensor at a distance from the diffusely reflecting surface (7), with the opening (11) for incident light of the sensor (2) directed upwards.

6. Light sensor assembly according to one of claims 2 to 4, characterized in that the auxiliary means have a second auxiliary member (42), the second auxiliary member (42) has a mirror surface (43) in an optical path between the diffusely reflecting surface (7) and the auxiliary means, and the auxiliary means orient the sensor (2) in such a way that the sensor (2) receives light reflected by the mirror surface (43) of the auxiliary member (42).

7. Light sensor assembly according to one of the preceding claims, characterized in that the auxiliary means comprise a cap (16) made of transparent material which protects the sensor (2) and the diffusely reflecting surface (7) in a substantially dustproof manner.
